# EUROPEAN PATENT SPECIFICATION

(11) **EP 2 493 222 B1**
(45) Date of publication and mention of the grant of the patent: **10.08.2016**
(21) Application number: 10832629.9
(22) Date of filing: 15.11.2010
(51) Int. Cl.: H04W 4/26

(54) **METHOD AND SYSTEM FOR IMPLEMENTING USAGE MONITORING CONTROL**
VERFAHREN UND SYSTEM ZUR IMPLEMENTIERUNG EINER GEBRAUCHSÜBERWACHUNGSKONTROLLE
PROCÉDÉ ET SYSTÈME DE MISE EN OEUVRE D'UN CONTRÔLE DE SURVEILLANCE D'UTILISATION

(30) Priority: 30.11.2009 CN 200910205979
(43) Date of publication of application: 29.08.2012
(73) Proprietor: ZTE Corporation, Shenzhen, Guangdong 518057 (CN)
(72) Inventor: ZHOU, Xiaoyun, Guangdong 518057 (CN); ZONG, Zaifeng, Guangdong 518057 (CN); WU, Jinhua, Guangdong 518057 (CN)
(74) Representative: V.O.
(86) International application number: PCT/CN2010/078718
(87) International publication number: WO 2011/063722

(56) References cited:
- EP-A1- 2 104 270
- WO-A1-2009/082278
- CN-A- 101 409 954
- CN-A- 101 431 420
- "3rd Generation Partnership Project; Technical Specification Group Services and System Aspects; Policy and charging control architecture (Release 9)", 3GPP STANDARD; 3GPP TS 23.203, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.2.0, 1 September 2009 (2009-09-01), pages 1-120, XP050363032,
- ZTE: "Policy control based on groups of subscriber", 3GPP DRAFT; S2-097085_POLICY CONTROL BASED ON GROUPS OF SUBSCRIBER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Cabo; 20091116 - 20091120, 11 November 2009 (2009-11-11), XP050630331, [retrieved on 2009-11-11]
- ZTE: "Policy control based on groups of subscriber", 3GPP DRAFT; S2-101032 POLICY CONTROL BASED ON GROUPS OF SUBSCRIBER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. San Francisco, USA; 20100222 - 20100226, 15 February 2010 (2010-02-15), XP050630602, [retrieved on 2010-02-15]

## Description

### Technical Field

The present invention relates to policy and charging technology, and more. particularly to a method and system for implementing usage monitoring control.

### Background

Since the release of the 3rd Generation Partnership Project Release 7 (3GPP Release 7), policy and charging function is achieved by Policy and Charging Control (PCC) frame. PCC architecture is a functional frame that can be applied to multiple access technologies, for example, PCC architecture can be applied to Terrestrial Radio Access Network (UTRAN) of Universal Mobile Telecommunications System (UMTS), Global system for Mobile Communication (GSM)/Enhanced Data Rate for GSM Evolution (EDGE) radio access network, Interworking-Wireless Local Area Network (I-WLAN) and Evolved Packet System (EPS).

The document 3 GPP TS 23.203 V 9.2.0 (2009-09) entitled "3rd Generation Partnership Project; Technical Specification Group Services and System Aspects; Policy and charging control architecture (Release 9)" specifies the overall stage 2 level functionality for Policy and Charging Control, including usage monitoring control for the accumulated usage of network resources on a per IP-CAN session and user basis. And the document 3 GPP TSG SA WG2 MEETING # 76 TD S2-097085 entitled "Policy control based on groups of subscriber" discloses a method for supporting the groups of subscriber based policy control to avoid the inaccurate PCC rules made by PCRF.

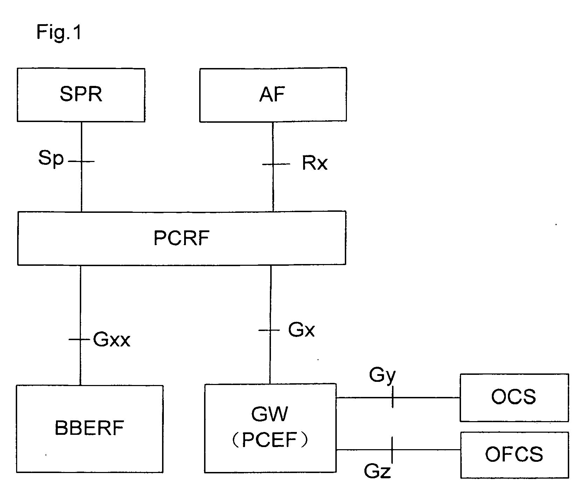

PCC mainly achieves two functions of policy control and charging. Fig. 1 is a schematic diagram of the architecture of existing PCC, and each logic functional entity in the PCC architecture as shown in Fig. 1 and the interface functions thereof are described below. As shown in Fig. 1,

Application Function (AF) is used to provide an access point for the service applications, and the network resources used by these service applications require a dynamic policy control. When performing a parameter negotiation on a service panel, AF transmits related service information to a Policy and Charging Rules Function (PCRF). If the service information accords with the policy of the PCRF, the PCRF accepts the negotiation; otherwise, the PCRF refuses the negotiation and gives service parameters that are acceptable by the PCRF in the feedback. Then, the AF may return these parameters to a User Equipment (UE). Wherein the interface between the AF and the PCRF is a Rx interface.

PCRF, which is the core of PCC, is responsible for making policy and charging rule. The PCRF provides network control rules based on service data flows, these network controls include: the detection of the service data flow, Gating Control, Quality of Service (QoS) control and charging rules based on data flows. The PCRF transmits the made policy and charging rules to a Policy and Charging Enforcement Function (PCEF) to be implemented; meanwhile, the PCRF is also required to guarantee that theses rules are in accordance with the subscription information of the user. Wherein the policy and charging rules made by the PCRF include: service-related information obtained from the AF; user policy and charging control subscription information related to the policy control and charging obtained from a Subscription Profile Repository (SPR); information related to a bearer network obtained from the PCEF via a Gx interface.

The PCEF generally locates within a Gateway (GW), and implements the policy and charging rules made by the PCRF on a bearing panel. The PCEF detects service data flows according to a service data flow filter contained in the rule transmitted from the PCRF, so as to perform the policy and charging rules made by the RCRF on the service data flows; when establishing a bearer, the PCEF performs QoS authorization according to the rules transmitted by the PCRF, and performs gating control according to execution of the AF; meanwhile, the PCEF triggers reporting of an event occurred on the bearer network according to the events subscribed by the PCRF; according to the charging rules transmitted from the PCRF, PCEF performs charging operation for corresponding service data flows, wherein the charging may be online or offline. In the case of an online charging, it is necessary that the PCEF performs a credit management together with an Online Charging System (OCS); and in the case of an offline charging, the PCEF exchanges related charging information with an Offline Charging System (OFCS). Wherein the interface between the PCEF and the PCRF is a Gx interface, and the interface between the PCEF and the OCS is a Gy interface, and the interface between the PCEF and the OFCS is a Gz interface. The PCEF generally locates on the gateway of a network, for example, Packet Data Network-Gate Way (PDN-GW) of EPS, Gateway GPRS Support Node (GGSN) of General Packet Radio Service (GPRS) and Packet Data Gateway (PDG) of Interworking WLAN (I-WLAN).

Bearer Binding and Event Reporting Function (BBERF) generally locates within an access network gateway. For instance, if a user equipment accesses an EPS via an E-UTRAN and Proxy Mobile Internet Protocol version 6 (PMIPv6) is employed between the S-GW and the P-GW, then the BBERF exists in the S-GW. If a user equipment accesses via a creditable non-3GPP access network, then the BBERF also exists in the creditable non-3GPP access gateway.

The Subscription Profile Repository (SPR) stores user policy charging control subscription information related to the policy control and charging. The interface between the SPR and the PCRF is a Sp interface.

The OCS and the PCEF jointly complete the control and management of the user credit in the case of online charging.

The OFCS and the PCEF jointly complete the charging operation in the case of offline charging.

In the prior art, PCC supports dynamic usage monitoring control for performing a dynamic policy decision based on a total amount of the network resource usage in real-time. Usage monitoring can be applied to a single service data flow, a group of service data flows or all of the service flows of an IP-Connectivity Access Network (IP-CAN) session. Presently, usage refers to the data service of user panel. In the prior art, an instance required to be usage monitored is identified by a Monitoring Key, for example: if the PCRF allocates a Monitoring Key and corresponding threshold for all of the service flows in an IP-CAN session, then the PCEF monitors the traffic of all the service flows of the IP-CAN according to the threshold and identifies a reported usage with the Monitoring Key. If the PCRF allocates a Monitoring Key and corresponding threshold for one service data flow or a group of service flows, then the PCRF carries the Monitoring Key in a PCC rule corresponding to the service data flow or the group of service data flows, and monitors the traffic of the service data flows corresponding to the PCC rules having the same Monitoring Key, and identifies a reported usage with the Monitoring Key.

Meanwhile, a total allowanced usage of a certain PDN of a user may also be stored in an SPR, i.e. a total allowanced usage for all of the service flows of one IP-CAN session, which may also be referred to as a total allowanced usage per PDN per user. SPR may also store a total allowanced usage for certain specific services of a PDN of a user, i.e. the total allowanced usage for one service data flow or a group of service data flows, which can also be identified with the Monitoring Key.

After the user establishes an IP-CAN session to a certain PDN, the SPR distributes the total allowanced usage to the PCRF. When PCRF performs a usage monitoring control, the PCRF subscribes a Usage_Report event trigger from the PCEF. After the Monitoring Key contained in the PCC rule is distributed, PCC rules having the same Monitoring Key share a threshold corresponding to the Monitoring Key. When the Monitoring Key is not contained in any PCC rule, all of the service data flows of the IP-CAN session share a threshold corresponding to the Monitoring Key. When it is monitored by PCEF that the usage reaches a threshold, an IP-CAN session terminates, all of the PCC rules containing a certain Monitoring Key are deleted or the PCRF explicitly requests a usage report, PCEF will reports the usage consumption of a related Monitoring Key since the last report to the PCRF. After the PCRF receives the usage report from the PCEF, the PCRF deducts the reported usage from the total allowanced usage. If the PCEF reports the usage of a certain Monitoring Key and a further monitoring is required, the PCRF will allocate a new threshold to the PCEF; and if no further monitoring is required, the PCRF will not allocate a new threshold to the PCEF. After the last IP-CAN session of an APN of the user terminates, the PCRF stores, in the SPR, the remaining allowanced usage comprising the total allowanced usage of the PDN or the total allowanced usage of some specific services of the PDN.

It can be seen from existing usage monitoring control scheme that existing usage monitoring control is performed for a certain PDN of a user or certain specific service flows of a certain PDN. Having some limitations, existing usage monitoring control cannot be applied in some cases, for example: for a family package, multiple users participated in this family package share a total allowanced usage of a certain PDN or a total subscription allowanced usage of certain specific service flows of a certain PDN. In this case, the PCRF should simultaneously perform a usage monitoring on multiple IP-CAN sessions to the same PDN established for multiple users participated in this family package or certain specific service flows to the same PDN.

In the prior art, when multiple users share a total allowanced usage, there is provided no solution that a PCRF simultaneously performs usage monitoring on multiple users according to a total allowanced usage. If still using existing usage monitoring control method for implementing a monitoring control on the user equipments sharing the same subscription information, then it will definitely lead to conflicts in policy and charging controls.

### Summary

In view of the above, the main purpose of the present invention is to provide a method for implementing usage monitoring control, which is capable of implementing usage monitoring control for multiple user equipments sharing the same subscription information, and thereby avoiding conflicts in policy and charging controls.

Another purpose of the present invention is to provide a system for implementing a monitoring control, which is capable of implementing usage monitoring control for multiple user equipments sharing the same subscription information, and thereby avoiding conflicts in policy and charging controls.

In order to achieve the above purposes, the present invention provides: a method for implementing usage monitoring control as defined in claim 1.

In the above solution, after the usage monitoring policy is made and before the SPR receives the usage report from the first PCRF, the method may further include: the first and/or second PCRF distributes the usage monitoring policy to a PCEF, and the PCEF performs a usage monitoring according to the usage monitoring policy, and reports a usage to the first and/or second PCRF.

In the above solution, the usage monitoring policy may include a usage threshold, which is smaller than or equal to the allowanced usage threshold.

In the above solution, the usage monitoring policy may include allocating, by the first PCRF, a first usage threshold for a Monitoring Key, and the first usage threshold may be smaller than or equal to the first allowanced usage threshold.

In the above solution, the usage monitoring policy may include allocating, by the second PCRF, a second usage threshold for a Monitoring Key, wherein the second usage threshold is smaller than or equal to the second allowanced usage threshold.

In the above solution, a triggering condition for reporting the usage to the first and/or second PCRF may be: when an event requiring a usage report is triggered; and/or when the IP-CAN session is terminated; and/or the first and/or second PCRF requests the PCEF to make a report.

In the above solution, after the usage is reported to the first and/or second PCRF, the method may further include: the first and/or second PCRF update the allowanced usage threshold with a value of a difference between the allowanced usage threshold and a consumed usage reported by the PCEF, and when the first and/or second PCRF decides to continue to perform the usage monitoring and the allowanced usage threshold at this moment is greater than 0, the first and/or second PCRF reallocates a new usage threshold, wherein the new usage threshold is smaller than or equal to the updated allowanced usage threshold,
the PCEF continues the usage monitoring according to the received new usage threshold.

In the above solution, the first and/or second PCRF may report the usage to the SPR when the first and/or second PCRF satisfies one of or any combination of the following conditions:
the updated allowanced usage threshold is 0; when the IP-CAN session is terminated; and the SPR requests the first and/or second PCRF to make a report.

In the above solution, the step that the SPR deducts the consumed usage from the total allowanced usage shared by the multiple users may include:
if the usage report received by the SPR is an allowanced usage consumption value, then the total allowanced usage is updated with a value of a difference between the total allowanced usage and the received allowanced usage consumption value; if the usage report received by the SPR is a remaining allowanced usage, then the total allowanced usage is updated with a value of a difference between the total allowanced usage and the allowanced usage threshold, plus the received remaining allowanced usage.

The present invention provides a system for implementing usage monitoring control as defined in claim 10.

In the above solution, the system may further include:
a PCEF configured to perform a usage monitoring according to the usage monitoring policy distributed by the first and/or second PCRF and report a usage to the first and/or second PCRF;
the first and/or second PCRF may be further configured to distribute the usage monitoring policy to the PCEF, allocate a usage threshold for each IP-CAN session or service data flow sharing the usage according to the allowanced usage threshold obtained from the SPR; and receive the usage reported by the PCEF.

In the above solution, after the PCEF reports the usage to the first and/or second PCRF, the first and/or second PCRF may be further configured to update the allowanced usage threshold with a value of a difference between the allowanced usage threshold and a consumed usage reported by the PCEF; and reallocate a new usage threshold that is smaller than or equal to the updated allowanced usage threshold when the first and/or second PCRF decides to continue to perform the usage monitoring and the allowanced usage threshold at this moment is greater than 0, and distribute the reallocated new usage threshold to the PCEF;
the PCEF may be further configured to continue to perform the usage monitoring according to the received new usage threshold.

In the above solution, the first and/or second PCRF may be configured to report a usage to the SPR when the updated allowanced usage threshold is equal to 0, when the IP-CAN session is terminated, or when the SPR requests the first and/or second PCRF to make a report.

It can be seen from the technical solution provided above, a total allowanced usage is prestored in a SPR, the SPR sets an allowanced usage threshold according to a request from a first and/or second PCRF and distributes the set allowanced usage threshold to the first and/or second PCRF; the first and/or second PCRF makes a usage monitoring policy according to the obtained allowanced usage threshold; the SPR deducts a consumed usage from the total allowanced usage shared by multiple users after receiving a usage report from the first and/or second PCRF. In the method of the present invention, when multiple users share a total allowanced usage, the first and/or second PCRF simultaneously monitors the usage on the multiple users according to the total allowanced usage, thereby avoiding conflicts in policy and charging controls

### Brief Description of the Drawings

Fig. 1 is a schematic diagram of the architecture of existing PCC;
Fig. 2 is a flow chart of a method for implementing usage monitoring control according to the present invention;
Fig. 3 is a flow chart of an embodiment of the method for implementing usage monitoring control according to the present invention;
Fig. 4 is a flow chart of a first embodiment for implementing the usage report of Fig. 3;
Fig. 5 is a flow chart of a second embodiment for implementing the usage report of Fig. 3;
Fig. 6 is a flow chart of a third embodiment for implementing the usage report of Fig. 3.

### Detailed Description

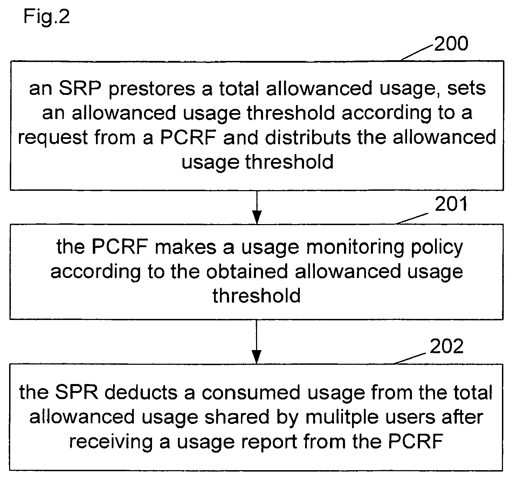

Fig. 2 is a flow chart of a method for implementing usage monitoring control according to the present invention. As shown in Fig. 2, the flow includes:
Step 200: an SRP prestores a total allowanced usage, sets an allowanced usage threshold according to a request from a PCRF and distributes the allowanced usage threshold.

In this step, assuming that the total allowanced usage of the IP-CAN session or service data flows shared by multiple users is TAU, then the SPR allocates an allowanced usage threshold AUTi for users who initiate the request and share the IP-CAN session or service data flows of the total allowanced usage, respectively, wherein AUTi is smaller than TAU, and i represents a different user.

Step 201: the PCRF makes a usage monitoring policy according to the obtained allowanced usage threshold;
here, the usage monitoring policy includes a usage threshold allocated by the PCRF for the users sharing the total allowanced usage of the IP-CAN session or service data flow.

In this step, the PCRF obtains the allowanced usage threshold for the users sharing the total allowanced usage, wherein the allowanced usage threshold is contained in the user subscription information returned by the SPR;
the PCRF makes a policy according to the returned subscription data, wherein the policy includes event triggers, such as a usage report event, a usage monitoring policy for a certain IP-CAN session or a certain specific service data flow and a Monitoring Key for a whole IP-CAN session or certain service data flows. The PCRF allocates a usage threshold UTi for the Monitoring Key, wherein UTi is smaller than or equal to AUTi.

Step 202: the SPR deducts a consumed usage from the total allowanced usage shared by multiple users after receiving a usage report from the PCRF.

In the step, when any one of or any combination of the following conditions are satisfied, the PCRF reports a usage to the SPR:
the updated allowanced usage threshold is 0; terminating the IP-CAN session; and the SPR requests the PCRF to make a report;
after the usage monitoring policy is made, and before the SPR receives a usage report from the PCRF, the method further includes: the PCRF distributes the usage monitoring policy to a PCEF, and the PCEF performs a usage monitoring according to the usage monitoring policy distributed by the PCRF and reports the usage to the PCRF. Here, the report of the usage by the PCEF may occur when an event requiring a usage report is triggered, for example, a usage monitored by a certain Monitoring Key (including IP-CAN session level and service data flow level) reaches a threshold, or the like; it also may be triggered by terminating the IP-CAN session; and it also may be triggered when the PCRF requests the PCEF to make a report, or the like.

After the PCEF reports a usage to the PCRF, the PCRF updates the allowanced usage threshold with a value of a difference between the allowanced usage threshold and the consumed usage reported by the PCEF, and when the PCRF decides to continue to perform a usage monitoring and the allowanced usage threshold at this moment is greater than 0, then the PCRF reallocates a new usage threshold that is smaller than or equal to the updated allowanced usage threshold; and the PCEF continues to perform a usage monitoring according to the received new usage threshold;
the deduction of the consumed usage from the total allowanced usage shared by the multiple users includes: if the usage report received by the SPR is an allowanced usage consumption value, then the total allowanced usage is updated with a value of a difference between the total allowanced usage and the received allowanced usage consumption value; and if the usage report received by the SPR is a remaining allowanced usage, then the total allowanced usage is updated with a value of a difference between the total allowanced usage and the allowanced usage threshold, plus the received remaining allowanced usage.

For the method of the present invention, a system for implementing usage monitoring control is also provided, which includes at least a PCRF and an SPR, wherein
the SPR is configured to store a total allowanced usage, set an allowanced usage threshold, and distribute the allowanced usage threshold according to a request from a PCRF; receive a usage report from the PCRF, and deduct the consumed usage from the total allowanced usage shared by multiple users;
the PCRF is configured to request the allowanced usage threshold from the SPR; make a usage monitoring policy according to the obtained allowanced usage threshold; and report a usage to the SPR.

The system further includes a PCEF, which is configured to perform a usage monitoring according to the usage monitoring policy distributed by the PCRF and report a usage to the PCRF;
correspondingly, the PCRF is further configured to distribute the usage monitoring policy to the PCEF, allocate a usage threshold for each IP-CAN session or service data flow sharing the usage according to the allowanced usage threshold obtained from the SPR; and receive the usage reported by the PCEF.

After the PCEF reports a usage to the PCRF, the PCRF is further configured to update the allowanced usage threshold with a value of a difference between the allowanced usage threshold and the usage consumption value reported by the PCEF; when the PCRF decides to continue to perform a usage monitoring and the allowanced usage threshold at this moment is greater than 0, then the PCRF reallocates a new usage threshold that is smaller than or equal to the updated allowanced usage threshold, and distributes the reallocated new usage threshold to the PCEF;
the PCEF is further configured to continue to perform a usage monitoring according to the received new usage threshold.

The method of the present invention will be described below in detail with reference to embodiments.

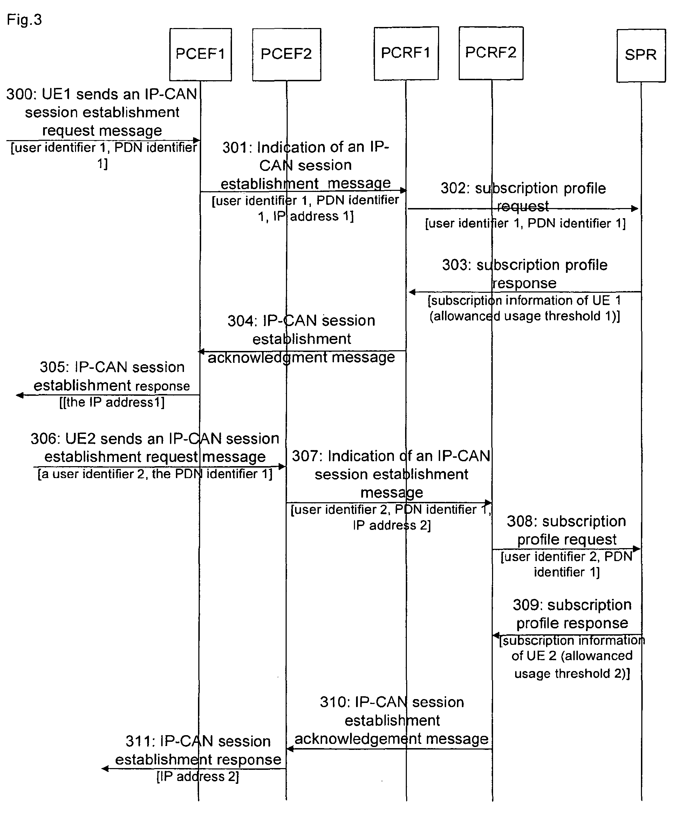

Fig. 3 is a flow chart of an embodiment of the method for implementing usage monitoring control according to the present invention. In this embodiment, there is described a case in which a UE1 and a UE2 share the TAU (Total Allowanced usage) of a PDN or the TAU of some specific data flows of a PDN; when UE1 and UE2 establish an IP-CAN session, respectively, an SPR distributes an AUT (allowanced usage threshold) to a PCRF, and the PCRF performs a usage monitoring control on the IP-CAN sessions established by UE1 and UE2 according to the AUT. As shown in Fig. 3, the method includes:
Step 300: UE1 sends an IP-CAN session establishment request message to a PCEF 1;
   specifically, during the process of requesting the establishment of an IP-CAN session 1, UE1 sends an IP-CAN session establishment request message to the PCEF 1, in which the user identifier 1 of UE 1 and the PDN identifier 1 of the PDN network requested to be accessed are carried.
Step 301: the PCEF 1 sends an indication of IP-CAN session establishment message to a PCRF1, in which the user identifier 1, the PDN identifier 1 and an IP address 1 allocated to UE 1 are carried.
Step 302: the PCRF 1 sends a subscription profile request to an SPR, in which the user identifier 1 and the PDN identifier 1 are carried.
Step 303: the SPR returns a subscription profile response message according to the user identifier 1 and the PDN identifier 1, in which the subscription information of UE 1 is included;
   in this step, since UE1 and UE2 share the total allowanced usage for the PDN identifier 1 or share the total allowanced usage of some specific service flows of the PDN identifier 1, the SPR allocates an allowanced usage threshold AUT 1 for the IP-CAN session 1 of the UE1, wherein AUT 1 is smaller than TAU. The SPR returns a subscription information including AUT1 to the PCRF 1.
Step 304: the PCRF 1 makes a usage monitoring policy according to the returned subscription information including AUT1, and sends an IP-CAN session establishment acknowledgement message to the PCEF1, in which the usage monitoring policy is carried;
   specifically, the PCRF 1 makes a usage monitoring policy according to the returned subscription information including AUT1, wherein the usage monitoring policy includes an event trigger--Usage_Report, a usage monitoring policy for the IP-CAN session 1 or some specific data flows and a Monitoring Key for a whole IP-CAN session or some service data flows. The PCRF 1 allocates a usage threshold UT1 for a Monitoring Key and sends the UT 1 to the PCEF 1, wherein UT1 is smaller than or equal to AUT1.
Step 305: the PCEF 1 returns an IP-CAN session establishment response to UE1, in which the IP address 1 is carried.

After Steps 300-305, the PCEF 1 performs a usage monitoring on the IP-CAN session 1 established by UE1 according to the usage monitoring policy distributed by the PCRF 1.

Step 306: a UE2 sends an IP-CAN session establishment request message to a PCEF 2;
specifically, during the process of requesting the establishment of an IP-CAN session 2, UE2 sends an IP-CAN session establishment request message to the PCEF 2 to request the establishment of the IP-CAN session 2, wherein the user identifier 2 of UE 2 and the PDN identifier 1 of the PDN network requested to be accessed are carried in the IP-CAN session establishment request message.

Here, the PCEF 1 may be the same as the PCEF 2 or not, and it is assumed in this embodiment that the PCEF 1 is different from the PCEF 2.

Step 307: the PCEF 2 sends an indication of IP-CAN session establishment message to a PCRF2, in which the user identifier 2, the PDN identifier 1 and an IP address 2 allocated to the UE 2 are carried. Here, the PCRF 2 may be the same as the PCRF 1 or not, and it is assumed in this embodiment that the PCRF 1 is different from the PCRF 2.

Step 308: the PCRF 2 sends a subscription profile request to an SPR, in which the user identifier 2 and the PDN identifier 1 are carried.

Step 309: the SPR returns a subscription profile response message according to the user identifier 2 and the PDN identifier 1, wherein the subscription information of the UE 2 is included in the subscription profile response message;
in this step, since UE 1 and UE 2 share the PDN identifier 1 or share the total allowanced usage TAU of a certain service, the SPR allocates an allowance usage threshold AUT2 for the IP-CAN session 1 of UE 2 and returns AUT2 to the PCRF 2, wherein the sum of AUT 1 and AUT2 is smaller than or equal to TAU.

Step 310: the PCRF 2 makes a usage monitoring policy according to the returned subscription information including the allowance usage threshold AUT2, and sends an IP-CAN session establishment acknowledgement message to the PCEF 2, in which the usage monitoring policy is carried;
specifically, the PCRF 2 makes a usage monitoring policy according to the returned subscription information including the allowance usage threshold AUT2, wherein the usage monitoring policy includes an event trigger--Usage_Report, a usage monitoring policy for the IP-CAN session 2 or some specific data flows and a Monitoring Key for a whole IP-CAN session or some service data flows. The PCRF 2 allocates a usage threshold UT2 for a Monitoring Key and sends the UT 2 to the PCEF 2, wherein UT2 is smaller than or equal to AUT2.

Step 311: the PCEF 2 returns an IP-CAN session establishment response to UE2, in which the IP address 2 is carried.

Up till now, UE 2 establishes the IP-CAN session 2. The PCRF 1 and PCRF 2 obtain the allowanced usage threshold TAU1 and TAU2 from the SPR, respectively, and allocate the usage monitoring policy to the PCEF 1 and the PCEF 2, respectively, in which the usage threshold AU1 and AU2 are included. The PCEF 1 and the PCEF 2 perform a usage monitoring.

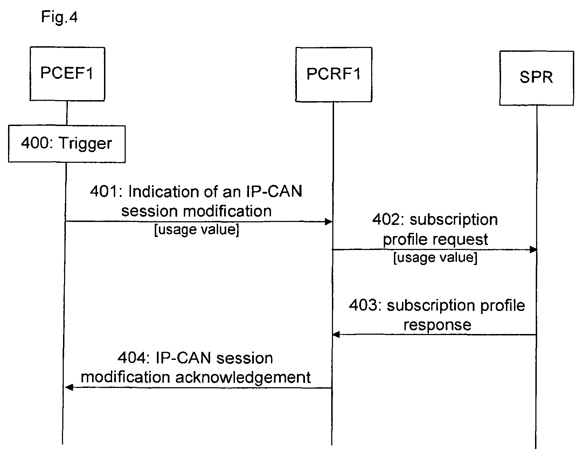

Fig. 4 is a flow chart of a first embodiment for implementing the usage report of Fig. 3, the first embodiment describes a flow for the PCEF 1 to implement a usage report after the establishment of a usage monitoring. As shown in Fig. 4, the flow includes:
Step 400: the PCEF 1 detects that an event requiring a usage report is triggered, wherein the triggering may be that a usage monitored by a certain Monitoring Key (including IP-CAN session level and service data flow level) reaches a threshold or all PCC rules corresponding to a certain Monitoring Key are deleted or deactivated.
Step 401: the PCEF 1 sends an indication of IP-CAN session modification message to the PCRF1, in which an event trigger value including Usage_Reprot and a Usage Report Value 1 (URV1) are included. If the triggering condition is that a usage monitored by a certain Monitoring Key reaches a threshold, then, URV 1 is equal to AUT 1; and if the triggering condition is that all the PCC rules corresponding to a certain Monitoring Key are deleted or deactivated, then URV1 is smaller than or equal to UT 1.

In this step, the PCRF 1 updates the allowanced usage threshold AUT1 with a value of (AUT1-URV1). When the PCRF 1 decides to continue to perform a usage monitoring and AUT1 is greater than 0 at this moment, then PCRF 1 will allocate a new usage threshold UT1' which is smaller than or equal to AUT1, and then executes Step 404. When the PCRF 1 decides to continue to perform a usage monitoring and AUT1 is equal to 0 at this moment, then the PCRF 1 executes Step 402. And when PCRF1 decides not to perform a usage monitoring, then the PCRF 1 executes Step 404.

Step 402: the PCRF 1 sends the SPR a subscription profile request message carrying an indication of allowanced usage report and Allowanced Usage Report Value AURV1, and in this case, AURV1 is equal to AUT1.

Step 403: the SPR updates the total allowanced usage TAU with a value of (TAU-AUT1). Since the SPR has already allocated an AUT2 for UE2, if the updated (TAU-AUT2) is greater than 0, the SPR will allocate a new allowanced usage threshold AUT1' for UE 1, wherein AUT1' is smaller than or equal to (TAU-AUT2). The SPR returns a subscription profile response message to the PCRF 1. If the SPR allocates a new allowanced usage threshold, then the allowanced usage threshold AUT1' is carried; otherwise, no allowanced usage threshold is carried.

Step 404: the PCRF 1 returns an IP-CAN session modification acknowledgement message to the PCEF 1.

If a new allowanced usage threshold AUT1' is carried in the subscription profile response message, then the PCRF 1 allocates a new usage threshold UT1' for UE 1 according to the AUT1' returned by the SPR, wherein UT1' is smaller than or equal to AUT1', and the new usage threshold UT1' is carried in the IP session modification acknowledgement message.

If the PCRF 1 distributes a new usage threshold UT1', then the PCEF 1 continues to perform a usage monitoring; otherwise, the PCEF 1 does not perform a usage monitoring any longer.

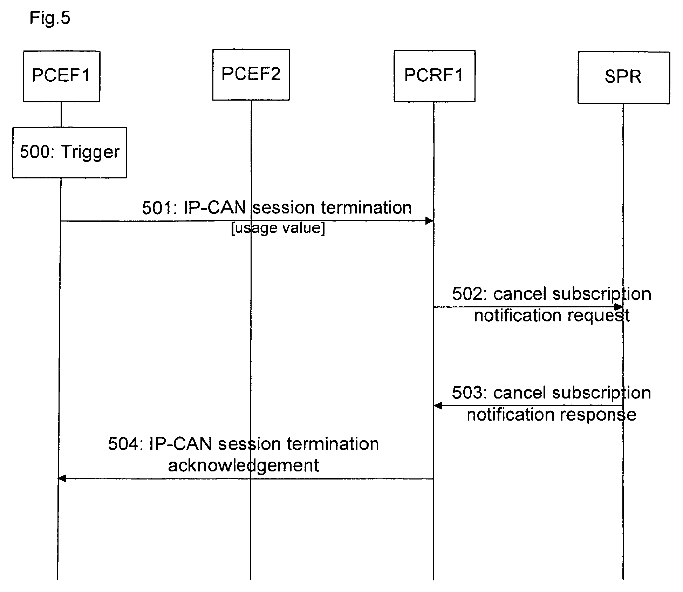

Fig. 5 is a flow chart of a second embodiment for implementing the usage report of Fig. 3, the second embodiment describes another flow for the PCEF 1 to implement a usage report after the establishment of a usage monitoring. As shown in Fig. 5, the flow includes:
Step 500: the PCEF 1 detects that the requirement of terminating the IP-CAN session1 is triggered, the triggering may be from other network elements, UE1 or PCEF1 itself.
Step 501: The PCEF1 sends an indication of IP-CAN session termination message, in which the usage consumption value of each Monitoring Key for performing usage monitoring is carried, to the PCRF 1, the usage consumption value is URV1 in the embodiment as shown in Fig. 3. Here, URV1 is smaller than or equal to UT1.
Step 502: the PCRF 1 updates the allowanced usage threshold AUT1 with a value of (AUT1-URV1). The PCRF 1 sends a cancel subscription notification request message to the SPR, in which an Allowanced Usage Report Value AURV1 of the Monitoring Key for performing a usage monitoring or a Remaining Allowanced Usage 1 RAU1 is carried, wherein AURV1 is equal to URV1 or the RAU1 is equal to AUT1.
Step 503: if the SPR receives the Allowanced Usage Report Value AURV1, then the SPR updates the total allowanced usage TAU with a value of (TAU-AURV1); if the SPR receives the Remaining Allowanced Usage RAU 1, the SPR updates the total allowanced usage TAU with a value of (TAU-AUT1+RAU 1), and returns a subscription cancel notification response to the PCRF 1.
Step 504: the PCRF 1 returns an IP-CAN session termination acknowledgement message to the PCEF 1.

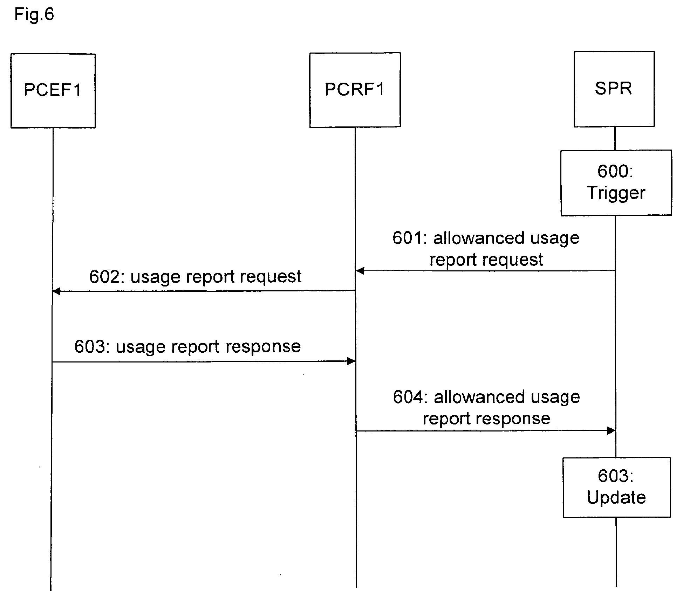

Fig. 6 is a flow chart of a third embodiment for implementing the usage report of Fig. 3, the third embodiment describes a flow for the SPR to request a usage report after the establishment of a usage monitoring. As shown in Fig. 6, the flow includes:
Step 600: the SPR detects that an event that requires the PCEF 1 to report the usage consumed is triggered.
Step 601: the SPR sends an allowanced usage report request message to the PCRF 1 to request the PCRF 1 to report an allowanced usage, wherein the Monitoring Key to be reported is carried in the allowanced usage report request message.
Step 602: the PCRF 1 sends a usage report request message to the PCEF 1 to request the PCEF 1 to report a usage consumed, wherein the Monitoring Key to be reported is carried in the usage report request message.
Step 603: the PCEF 1 sends a usage report response message to the PCRF 1, in which the Usage Report Value URV 1 of the Monitoring Key to be reported is carried. In this case, URV1 is smaller than or equal to UT1.
Step 604: the PCRF 1 updates the Allowanced Usage Threshold AUT1 of the Monitoring Key to be a value of (AUT1-URV1). The PCRF 1 sends the SPR an allowanced usage report response message carrying the Allowanced Usage Report Value AURV1 of the Monitoring Key to be reported or the Remaining Allowanced Usage RAU 1, wherein AURV1 is equal to the URV1 or the RAU1 is equal to AU1.

In this step, if the SPR receives the Allowanced Usage Report Value AURV1, then the Total Allowanced Usage TAU of the Monitoring Key is updated with value of (TAU-AURV1); or if the SPR receives the Remaining Allowanced Usage RAU 1, then the Total Allowanced Usage TAU of the Monitoring Key is updated with a value of (TAU-AUT1+RAU).

When the PCRF 1 does not receive an allowanced usage report request message send by the SPR, it may also send a usage report request message to the PCEF 1 in response to a triggering condition of the PCRF 1 itself, see Steps 602-603.

In the embodiments as described in Fig. 3-6, UE1 and UE2 share the total allowanced usage, and UE1 and UE2 only establish one IP-CAN session for one APN (i.e. PDN ID1), respectively. The method of the present invention is also applicable to the case in which UE1 and UE2 establish multiple IP-CAN sessions for one APN (i.e. PDN ID1), respectively, the specific implementations in accordance with the method of the present invention can be easily obtained by persons skilled in the art according to the foregoing embodiments and will not be described herein.

Although the above embodiments describe the implementation flows for usage monitoring control in the case where two users share a subscribed total allowanced usage, the flows for usage monitoring control in the case where more than two users share a subscribed total allowanced usage are similar.

The above embodiments are only preferred embodiments of the present invention, and not intend to limit the protection scope of the present invention, any modification, equivalent replacement and improvement within the principle of the present invention should be included in the protection scope of the present invention.

## Claims

1. A method for implementing usage monitoring control, comprising:
prestoring (200) a total allowanced usage shared by multiple users in a Subscription Profile Repository, SPR;
setting (200), by the SPR, an allowanced usage threshold according to a request from a first Policy and Charging Rules Function, PCRF, and distributing (200), by the SPR, the set allowanced usage threshold to the first PCRF;
making (201), by the first PCRF, a usage monitoring policy according to the obtained allowanced usage threshold;
deducting (202), by the SPR, a consumed usage from the total allowanced usage shared by the multiple users after receiving a usage report from the first PCRF; wherein
different PCRFs are selected for the multiple users, and the first PCRF is selected for a first user, while a second PCRF is selected for a second user;
when the first user in the multiple users requests to establish an IP-Connectivity * Access Network, IP-CAN, session, the step of obtaining, by the first PCRF, the allowanced usage threshold comprises:
including, by the SPR, the allowanced usage threshold in a subscription information of the users and returning the subscription information to the first PCRF;
wherein the allowanced usage threshold is a first allowanced usage threshold; and the first allowanced usage threshold is smaller than or equal to the total allowanced usage,
the first allowanced usage threshold is for all service data flows of a certain IP-CAN session or for one or more service data flows in a certain IP-CAN session;
when the second user in addition to the first user in the multiple users requests to establish an IP-CAN session,
including, by the SPR, a second allowanced usage threshold in the subscription information of the users and returning the subscription information to the second PCRF,
wherein a sum of the first allowanced usage threshold and the second allowanced usage threshold is smaller than or equal to the total allowanced usage.

2. The method according to claim 1, further comprising: distributing, by the first and/or second PCRF, the usage monitoring policy to a Policy and Charging Enforcement Function, PCEF, after the usage monitoring policy is made and before the SPR receives the usage report from the first and/or second PCRF, and performing, by the PCEF, a usage monitoring according to the usage monitoring policy, and reporting, by the PCEF, a usage to the first and/or second PCRF.

3. The method according to claim 2, wherein the usage monitoring policy comprises a usage threshold, which is smaller than or equal to the allowanced usage threshold.

4. The method according to claim 1, wherein the usage monitoring policy comprises allocating, by the first PCRF, a first usage threshold for a Monitoring Key, and the first usage threshold is smaller than or equal to the first allowanced usage threshold.

5. The method according to claim 1, wherein the usage monitoring policy comprises allocating, by the second PCRF, a second usage threshold for a Monitoring Key, wherein the second usage threshold is smaller than or equal to the second allowanced usage threshold.

6. The method according to claim 2, wherein a triggering condition for reporting the usage to the first and/or second PCRF is: when an event requiring a usage report is triggered; and/or when the IP-CAN session is terminated; and/or the first and/or second PCRF requests the PCEF to make a report.

7. The method according to claim 6, further comprising: updating, by the first and/or second PCRF, the allowanced usage threshold with a value of a difference between the allowanced usage threshold and a consumed usage reported by the PCEF after the usage is reported to the first and/or second PCRF,
reallocating, by the first and/or second PCRF, a new usage threshold when the first and/or second PCRF decides to continue to perform the usage monitoring and the allowanced usage threshold at this moment is greater than 0, wherein the new usage threshold is smaller than or equal to the updated allowanced usage threshold.
continuing, by the PCEF, the usage monitoring according to the received new usage threshold.

8. The method according to claim 7, wherein the first and/or second PCRF reports the usage to the SPR when the first and/or second PCRF satisfies one of or any combination of the following conditions:
the updated allowanced usage threshold is 0; when the IP-CAN session is terminated; and the SPR requests the first and/or second PCRF to make a report.

9. The method according to claim 1 or 2, wherein the step of deducting, by the SPR, the consumed usage from the total allowanced usage shared by the multiple users comprises:
if the usage report received by the SPR is an allowanced usage consumption value, then the total allowanced usage is updated with a value of a difference between the total allowanced usage and the received allowanced usage consumption value; if the usage report received by the SPR is a remaining allowanced usage, then the total allowanced usage is updated with a value of a difference between the total allowanced usage and the allowanced usage threshold, plus the received remaining allowanced usage.

10. A system for implementing usage monitoring control, comprising at least a first Policy and Charging Rules Function, PCRF, and a Subscription Profile Repository, SPR, **characterized in that**
the SPR is configured to store (200) a total allowanced usage shared by multiple users, set (200) an allowanced usage threshold, and distribute (200) the allowanced usage threshold according to a request of the first PCRF; receive (202) a usage report from the first PCRF, and deduct (202) a consumed usage from the total allowanced usage shared by the multiple users;
the first PCRF is configured to request (201) the allowanced usage threshold from the SPR; make (201) a usage monitoring policy according to the obtained allowanced usage threshold; and report the usage report to the SPR;
wherein
different PCRFs are selected for the multiple users, and the first PCRF is selected for a first user, while a second PCRF is selected for a second user;
when the first user in the multiple users requests to establish an IP-Connectivity Access Network, IP-CAN, session:
the SPR is configured to include the allowanced usage threshold in a subscription information of the users and return the subscription information to the first PCRF;
wherein the allowanced usage threshold is a first allowanced usage threshold; and the first allowanced usage threshold is smaller than or equal to the total allowanced usage,
the first allowanced usage threshold is for all service data flows of a certain IP-CAN session or for one or more service data flows in a certain IP-CAN session;
when the second user in addition to the first user in the multiple users requests to establish an IP-CAN session,
the SPR is configured to include a second allowanced usage threshold in the subscription information of the users and return the subscription information to the second PCRF,
wherein a sum of the first allowanced usage threshold and the second allowanced usage threshold is smaller than or equal to the total allowanced usage.

11. The system according to claim 10, further comprising:
a Policy and Charging Enforcement Function, PCEF, configured to perform a usage monitoring according to the usage monitoring policy distributed by the first and/or second PCRF and report a usage to the first and/or second PCRF;
wherein the first and/or second PCRF is correspondingly further configured to distribute the usage monitoring policy to the PCEF, allocate a usage threshold for each IP-CAN session or service data flow sharing the usage according to the allowanced usage threshold obtained from the SPR; and receive the usage reported by the PCEF.

12. The system according to claim 11, wherein the first and/or second PCRF is further configured to update the allowanced usage threshold with a value of a difference between the allowanced usage threshold and a consumed usage reported by the PCEF after the PCEF reports the usage to the first and/or second PCRF; and reallocate a new usage threshold that is smaller than or equal to the updated allowanced usage threshold when the first and/or second PCRF decides to continue to perform the usage monitoring and the allowanced usage threshold at this moment is greater than 0, and distribute the reallocated new usage threshold to the PCEF;
the PCEF is further configured to continue to perform the usage monitoring according to the received new usage threshold.

13. The system according to claim 12, wherein the first and/or second PCRF is configured to report a usage to the SPR when the updated allowanced usage threshold is equal to 0, when the IP-CAN session is terminated, or when the SPR requests the first and/or second PCRF to make a report.

## Patentansprüche

1. Verfahren zum Implementieren einer Nutzungsüberwachungssteuerung, umfassend:
Vorspeichern (200) einer gesamten gestatteten Nutzung, die von einer Vielzahl von Nutzern geteilt wird, in einem Teilnehmerprofilspeicher, SPR;
Einstellen (200), durch das SPR, eines gestatteten Nutzungsschwellenwerts gemäß einer Anforderung von einer ersten Richtlinien- und Gebührenregelungsfunktion, PCRF, und Verteilen (200), durch das SPR, des eingestellten gestatteten Nutzungsschwellenwerts an die erste PCRF;
Erstellen (201), durch die erste PCRF, einer Nutzungsüberwachungsrichtlinie gemäß dem erhaltenen gestatteten Nutzungsschwellenwert;
Abziehen (202), durch das SPR, einer verbrauchten Nutzung von der gesamten gestatteten Nutzung, die von der Vielzahl von Nutzern geteilt wird, nach Empfangen eines Nutzungsberichts von der ersten PCRF;
wobei
verschiedene PCRFs für die Vielzahl von Nutzern ausgewählt werden und die erste PCRF für einen ersten Nutzer ausgewählt wird, während eine zweite PCRF für einen zweiten Nutzer ausgewählt wird;
wenn der erste Nutzer in der Vielzahl von Nutzern anfordert, dass eine IP-Konnektivität Zugangsnetzwerk, IP-CAN, -Sitzung eingerichtet wird, der Schritt des Erhaltens, durch die erste PCRF, des gestatteten Nutzungsschwellenwerts umfasst:
Einschließen, durch das SPR, des gestatteten Nutzungsschwellenwerts in eine Abonnementsinformation der Nutzer und Zurückgeben der Abonnementsinformation an die erste PCRF;
wobei der gestattete Nutzungsschwellenwert ein erster gestatteter Nutzungsschwellenwert ist; und der erste gestattete Nutzungsschwellenwert kleiner als oder gleich der gesamten gestatteten Nutzung ist,
der erste gestattete Nutzungsschwellenwert für alle Dienstdatenströme einer bestimmten IP-CAN-Sitzung oder für einen oder mehrere Dienstdatenströme in einer bestimmten IP-CAN-Sitzung ist;
wenn der zweite Nutzer zusätzlich zum ersten Nutzer in der Vielzahl von Nutzern anfordert, eine IP-CAN-Sitzung einzurichten,
Einschließen, durch das SPR, eines zweiten gestatteten Nutzungsschwellenwerts in die Abonnementsinformation der Nutzer und Zurückgeben der Abonnementsinformation an die zweite PCRF,
wobei eine Summe des ersten gestatteten Nutzungsschwellenwerts und des zweiten gestatteten Nutzungsschwellenwerts kleiner als oder gleich der gesamten gestatteten Nutzung ist.

2. Verfahren gemäß Anspruch 1, ferner umfassend: Verteilen, durch die erste und/oder zweite PCRF, der Nutzungsüberwachungsrichtlinie an eine Richtlinien- und Gebührendurchsetzungsfunktion, PCEF, nachdem die Nutzungsüberwachungsrichtlinie erstellt wurde und bevor das SPR den Nutzungsbericht von der ersten und/oder der zweiten PCRF empfängt, und Durchführen, durch die PCEF, einer Nutzungsüberwachung gemäß der Nutzungsüberwachungsrichtlinie, und Berichten, durch die PCEF, einer Nutzung an die erste und/oder die zweite PCRF.

3. Verfahren gemäß Anspruch 2, wobei die Nutzungsüberwachungsrichtlinie einen Nutzungsschwellenwert umfasst, der kleiner als oder gleich dem gestatteten Nutzungsschwellenwert ist.

4. Verfahren gemäß Anspruch 1, wobei die Nutzungsüberwachungsrichtlinie ein Zuteilen, durch die erste PCRF, eines ersten Nutzungsschwellenwerts für einen Überwachungsschlüssel umfasst, und der erste Nutzungsschwellenwert kleiner als oder gleich dem ersten gestatteten Nutzungsschwellenwert ist.

5. Verfahren gemäß Anspruch 1, wobei die Nutzungsüberwachungsrichtlinie ein Zuteilen, durch die zweite PCRF, eines zweiten Nutzungsschwellenwerts für einen Überwachungsschlüssel umfasst, wobei der zweite Nutzungsschwellenwert kleiner als oder gleich dem zweiten gestatteten Nutzungsschwellenwert ist.

6. Verfahren gemäß Anspruch 2, wobei eine Auslösebedingung zum Berichten der Nutzung an die erste und/oder zweite PCRF ist: wenn ein Ereignis, das einen Nutzungsbericht erfordert, ausgelöst wird; und/oder wenn die IP-CAN-Sitzung beendet wird; und/oder die erste und/oder die zweite PCRF die PCEF auffordert, einen Bericht zu erstatten.

7. Verfahren gemäß Anspruch 6, ferner umfassend: Aktualisieren, durch die erste und/oder zweite PCRF, des gestatteten Nutzungsschwellenwerts durch einen Wert einer Differenz zwischen dem gestatteten Nutzungsschwellenwert und einer verbrauchten Nutzung, die von der PCEF berichtet wurde, nachdem die Nutzung an die erste und/oder zweite PCRF berichtet wurde,
neues Zuteilen, durch die erste und/oder zweite PCRF, eines neuen Nutzungsschwellenwerts, wenn die erste und/oder die zweite PCRF entscheidet, die Nutzungsüberwachung weiterhin durchzuführen, und der gestattete Nutzungsschwellenwert zu diesem Zeitpunkt größer als 0 ist, wobei der neue Nutzungsschwellenwert kleiner als oder gleich dem aktualisierten gestatteten Nutzungsschwellenwert ist,
Fortführen, durch die PCEF, der Nutzungsüberwachung gemäß dem empfangenen neuen Nutzungsschwellenwert.

8. Verfahren gemäß Anspruch 7, wobei die erste und/oder die zweite PCRF die Nutzung an das SPR berichtet, wenn die erste und/oder die zweite PCRF eine oder eine beliebige Kombination der folgenden Bedingungen erfüllt:
wenn der aktualisierte gestattete Nutzungsschwellenwert 0 ist; wenn die IP-CAN-Sitzung beendet ist; und das SPR die erste und/oder die zweite PCRF auffordert, einen Bericht zu erstatten.

9. Verfahren gemäß Anspruch 1 oder 2, wobei der Schritt zum Abziehen, durch das SPR, der verbrauchten Nutzung von der gesamten gestatteten Nutzung, die von der Vielzahl von Nutzern geteilt wird, umfasst:
wenn der von dem SPR empfangene Nutzungsbericht ein gestatteter Nutzungsverbrauchswert ist, dann wird die gesamte gestattete Nutzung durch einen Wert einer Differenz zwischen der gesamten gestatteten Nutzung und dem empfangenen gestatteten Nutzungsverbrauchswert aktualisiert; wenn der von dem SPR empfangene Nutzungsbericht eine verbleibende gestattete Nutzung ist, dann wird die gesamte gestattete Nutzung durch einen Wert einer Differenz zwischen der gesamten gestatteten Nutzung und dem gestatteten Nutzungsschwellenwert, plus der empfangenen verbleibenden gestatteten Nutzung aktualisiert.

10. System zum Implementieren einer Nutzungsüberwachungssteuerung, umfassend mindestens eine erste Richtlinien- und Gebührenregelungsfunktion, PCRF, und ein Teilnehmerprofilspeicher, SPR, **dadurch gekennzeichnet, dass**
das SPR dazu konfiguriert ist, eine gesamte gestattete Nutzung, die von einer Vielzahl von Nutzern geteilt wird, zu speichern (200), einen gestatteten Nutzungsschwellenwert einzustellen (200) und den gestatteten Nutzungsschwellenwert gemäß einer Anforderung der ersten PCRF zu verteilen (200); einen Nutzungsbericht von der ersten PCRF zu empfangen (202) und eine verbrauchte Nutzung von der gesamten gestatteten Nutzung, die von der Vielzahl von Nutzern geteilt wird, abzuziehen (202);
die erste PCRF dazu konfiguriert ist, den gestatteten Nutzungsschwellenwert von dem SPR anzufordern (201); eine Nutzungsüberwachungsrichtlinie gemäß dem erhaltenen gestatteten Nutzungsschwellenwert zu erstellen (201); und den Nutzungsbericht an das SPR zu erstatten;
wobei
verschiedene PCRFs für die Vielzahl von Nutzern ausgewählt werden und die erste PCRF für einen ersten Nutzer ausgewählt wird, während eine zweite PCRF für einen zweiten Nutzer ausgewählt wird;
wenn der erste Nutzer in der Vielzahl von Nutzern anfordert, dass eine IP-Konnektivität Zugangsnetzwerk, IP-CAN, -Sitzung eingerichtet wird:
das SPR dazu konfiguriert ist, den gestatteten Nutzungsschwellenwert in eine Abonnementsinformation der Nutzer einzuschließen und die Abonnementsinformation an die erste PCRF zurückzugeben;
wobei der gestattete Nutzungsschwellenwert ein erster gestatteter Nutzungsschwellenwert ist; und der erste gestattete Nutzungsschwellenwert kleiner als oder gleich der gesamten gestatteten Nutzung ist,
der erste gestattete Nutzungsschwellenwert für alle Dienstdatenströme einer bestimmten IP-CAN-Sitzung oder für einen oder mehrere Dienstdatenströme in einer bestimmten IP-CAN-Sitzung ist;
wenn der zweite Nutzer zusätzlich zum ersten Nutzer in der Vielzahl von Nutzern anfordert, eine IP-CAN-Sitzung einzurichten,
das SPR dazu konfiguriert ist, einen zweiten gestatteten Nutzungsschwellenwert in die Abonnementsinformation der Nutzer einzuschließen und die Abonnementsinformation an die zweite PCRF zurückzugeben,
wobei eine Summe des ersten gestatteten Nutzungsschwellenwerts und des zweiten gestatteten Nutzungsschwellenwerts kleiner als oder gleich der gesamten gestatteten Nutzung ist.

11. System gemäß Anspruch 10, ferner umfassend:
eine Richtlinien- und Gebührendurchsetzungsfunktion, PCEF, die dazu konfiguriert ist, eine Nutzungsüberwachung gemäß der Nutzungsüberwachungsrichtlinie durchzuführen, die durch die erste und/oder die zweite PCRF verteilt wurde, und eine Nutzung an die erste und/oder die zweite PCRF zu berichten;
wobei die erste und/oder die zweite PCRF entsprechend ferner dazu konfiguriert ist, die Nutzungsüberwachungsrichtlinie an die PCEF zu verteilen, einen Nutzungsschwellenwert für jede IP-CAN-Sitzung oder Dienstdatenstromteilung der Nutzung gemäß dem von dem SPR erhaltenen gestatteten Nutzungsschwellenwert zuzuteilen; und die von der PCEF berichtete Nutzung zu empfangen.

12. System gemäß Anspruch 11, wobei die erste und/oder die zweite PCRF ferner dazu konfiguriert ist, den gestatteten Nutzungsschwellenwert durch einen Wert einer Differenz zwischen dem gestatteten Nutzungsschwellenwert und einer verbrauchten Nutzung, die von der PCEF berichtet wurde, zu aktualisieren, nachdem die PCEF die Nutzung an die erste und/oder zweite PCRF berichtet; und einen neuen Nutzungsschwellenwert neu zuzuteilen, der kleiner als oder gleich dem aktualisierten gestatteten Nutzungsschwellenwert ist, wenn die erste und/oder die zweite PCRF entscheidet, die Nutzungsüberwachung weiterhin durchzuführen und der gestattete Nutzungsschwellenwert zu diesem Zeitpunkt größer als 0 ist, und den neu zugeteilten neuen Nutzungsschwellenwert an die PCEF zu verteilen;
die PCEF ferner dazu konfiguriert ist, weiterhin die Nutzungsüberwachung gemäß dem empfangenen neuen Nutzungsschwellenwert durchzuführen.

13. System gemäß Anspruch 12, wobei die erste und/oder zweite PCRF dazu konfiguriert ist, eine Nutzung an das SPR zu berichten, wenn der aktualisierte gestattete Nutzungsschwellenwert gleich 0 ist, wenn die IP-CAN-Sitzung beendet ist, oder wenn das SPR die erste und/oder zweite PCRF auffordert, einen Bericht zu erstatten.

## Revendications

1. Procédé pour mettre en oeuvre un contrôle de surveillance d'utilisation, comprenant :
le pré-stockage (200) d'une utilisation allouée totale partagée par de multiples utilisateurs dans un Référentiel de profil d'abonnement, SPR ;
la fixation (200), par le SPR, d'un seuil d'utilisation allouée selon une demande en provenance d'une première Fonction de règles de politique et de taxation, PCRF, et la distribution (200), par le SPR, du seuil d'utilisation allouée fixé à la première PCRF ;
l'exécution (201), par la première PCRF, d'une politique de surveillance d'utilisation selon le seuil d'utilisation allouée obtenu ;
la déduction (202), par le SPR, d'une utilisation consommée de l'utilisation allouée totale partagée par les multiples utilisateurs après la réception d'un rapport d'utilisation en provenance de la première PCRF ;
dans lequel
différentes PCRF sont sélectionnées pour les multiples utilisateurs, et la première PCRF est sélectionnée pour un premier utilisateur, tandis qu'une seconde PCRF est sélectionnée pour un second utilisateur ;
lorsque le premier utilisateur dans les multiples utilisateurs demande d'établir une session de Réseau d'accès de connectivité IP, IP-CAN, l'étape d'obtention, par la première PCRF, du seuil d'utilisation allouée comprend :
l'inclusion, par le SPR, du seuil d'utilisation allouée dans une information d'abonnement des utilisateurs et le retour de l'information d'abonnement à la première PCRF ;
dans lequel le seuil d'utilisation allouée est un premier seuil d'utilisation allouée ; et le premier seuil d'utilisation allouée est inférieur ou égal à l'utilisation allouée totale,
le premier seuil d'utilisation allouée est pour tous les flux de données de service d'une certaine session IP-CAN ou pour un ou plusieurs flux de données de service dans une certaine session IP-CAN ;
lorsque le second utilisateur en plus du premier utilisateur dans les multiples utilisateurs demande d'établir une session IP-CAN,
l'inclusion, par le SPR, d'un second seuil d'utilisation allouée dans l'information d'abonnement des utilisateurs et le retour de l'information d'abonnement à la seconde PCRF,
dans lequel une somme du premier seuil d'utilisation allouée et du second seuil d'utilisation allouée est inférieure ou égale à l'utilisation allouée totale.

2. Procédé selon la revendication 1, comprenant en outre : la distribution, par la première et/ou seconde PCRF, de la politique de surveillance d'utilisation à une Fonction d'application de politique et de taxation, PCEF, après que la politique de surveillance d'utilisation est effectuée et avant que le SPR ne reçoive le rapport d'utilisation en provenance de la première et/ou seconde PCRF, et l'exécution, par la PCEF, d'une surveillance d'utilisation selon la politique de surveillance d'utilisation, et le rapport, par la PCEF, d'une utilisation à la première et/ou seconde PCRF.

3. Procédé selon la revendication 2, dans lequel la politique de surveillance d'utilisation comprend un seuil d'utilisation, qui est inférieur ou égal au seuil d'utilisation allouée.

4. Procédé selon la revendication 1, dans lequel la politique de surveillance d'utilisation comprend l'affectation, par la première PCRF, d'un premier seuil d'utilisation pour une Clé de surveillance, et le premier seuil d'utilisation est inférieur ou égal au premier seuil d'utilisation allouée.

5. Procédé selon la revendication 1, dans lequel la politique de surveillance d'utilisation comprend l'affectation, par la seconde PCRF, d'un second seuil d'utilisation pour une Clé de surveillance, dans lequel le second seuil d'utilisation est inférieur ou égal au second seuil d'utilisation allouée.

6. Procédé selon la revendication 2, dans lequel une condition de déclenchement pour rapporter l'utilisation de la première et/ou seconde PCRF est :
lorsqu'un événement requérant un rapport d'utilisation est déclenché ; et/ou lorsque la session IP-CAN est terminée ; et/ou la première et/ou seconde PCRF demande à la PCEF de faire un rapport.

7. Procédé selon la revendication 6, comprenant en outre : la mise à jour par la première et/ou seconde PCRF, du seuil d'utilisation allouée avec une valeur d'une différence entre le seuil d'utilisation allouée et une utilisation consommée rapportée par la PCEF après que l'utilisation est rapportée à la première et/ou seconde PCRF,
la réaffectation, par la première et/ou seconde PCRF, d'un nouveau seuil d'utilisation lorsque la première et/ou seconde PCRF décide de continuer à effectuer la surveillance d'utilisation et le seuil d'utilisation allouée à ce moment-là est supérieur à 0, où le nouveau seuil d'utilisation est inférieur ou égale au seuil d'utilisation allouée mis à jour ;
la continuation, par la PCEF, de la surveillance d'utilisation selon le nouveau seuil d'utilisation reçu.

8. Procédé selon la revendication 7, dans lequel la première et/ou seconde PCRF rapporte l'utilisation au SPR lorsque la première et/ou seconde PCRF satisfait à l'une ou à une combinaison quelconque des conditions suivantes :
le seuil d'utilisation allouée mis à jour est 0 ; lorsque la session IP-CAN est terminée ; et le SPR demande à la première et/ou seconde PCRF de faire un rapport.

9. Procédé selon la revendication 1 ou 2, dans lequel l'étape de déduction, par le SPR, de l'utilisation consommée de l'utilisation allouée totale partagée par les multiples utilisateurs comprend :
si le rapport d'utilisation reçu par le SPR est une valeur de consommation d'utilisation allouée, alors l'utilisation allouée totale est mise à jour avec une valeur d'une différence entre l'utilisation totale allouée et la valeur de consommation d'utilisation allouée reçue ; si le rapport d'utilisation reçu par le SPR est une utilisation allouée restante, alors l'utilisation allouée totale est mise à jour avec une valeur d'une différence entre l'utilisation allouée totale et le seuil d'utilisation allouée, plus l'utilisation allouée restante reçue.

10. Système pour mettre en oeuvre un contrôle de surveillance d'utilisation, comprenant au moins une première Fonction de règles de politique et de taxation, PCRF, et un Référentiel de profil d'abonnement, SPR, **caractérisé en ce que**
le SPR est configuré pour stocker (200) une utilisation allouée totale partagée par de multiples utilisateurs, fixer (200) un seuil d'utilisation allouée, et distribuer (200) le seuil d'utilisation allouée selon une demande de la première PCRF ; recevoir (202) un rapport d'utilisation en provenance de la première PCRF, et déduire (202) une utilisation consommée de l'utilisation allouée totale partagée par les multiples utilisateurs ;
la première PCRF est configurée pour demander (201) le seuil d'utilisation allouée au SPR ; effectuer (201) une politique de surveillance d'utilisation selon le seuil d'utilisation allouée obtenu ; et rapporter le rapport d'utilisation au SPR ;
dans lequel
différentes PCRF sont sélectionnées pour les multiples utilisateurs, et la première PCRF est sélectionnée pour un premier utilisateur, tandis qu'une seconde PCRF est sélectionnée pour un second utilisateur ;
lorsque le premier utilisateur dans les multiples utilisateurs demande d'établir une session de Réseau d'accès de connectivité IP, IP-CAN :
le SPR est configuré pour inclure le seuil d'utilisation allouée dans une information d'abonnement des utilisateurs et retourner l'information d'abonnement à la première PCRF ;
dans lequel le seuil d'utilisation allouée est un premier seuil d'utilisation allouée ; et le premier seuil d'utilisation allouée est inférieur ou égal à l'utilisation allouée totale,
le premier seuil d'utilisation allouée est pour tous les flux de données de service d'une certaine session IP-CAN ou pour un ou plusieurs flux de données de service dans une certaine session IP-CAN ;
lorsque le second utilisateur en plus du premier utilisateur dans les multiples utilisateurs demande d'établir une session IP-CAN,
le SPR est configuré pour inclure un second seuil d'utilisation allouée dans l'information d'abonnement des utilisateurs et retourner l'information d'abonnement à la seconde PCRF,
dans lequel une somme du premier seuil d'utilisation allouée et du second seuil d'utilisation allouée est inférieure ou égale à l'utilisation allouée totale.

11. Système selon la revendication 10, comprenant en outre :
une Fonction d'application de politique et de taxation, PCEF, configurée pour effectuer une surveillance d'utilisation selon la politique de surveillance d'utilisation distribuée par la première et/ou seconde PCRF et rapporter une utilisation à la première et/ou seconde PCRF ;
dans lequel la première et/ou seconde PCRF est en outre configurée de manière correspondante pour distribuer la politique de surveillance d'utilisation à la PCEF, affecter un seuil d'utilisation pour chaque session
IP-CAN ou flux de données de service partageant l'utilisation selon le seuil d'utilisation allouée obtenu à partir du SPR ; et recevoir l'utilisation rapportée par la PCEF.

12. Système selon la revendication 11, dans lequel la première et/ou seconde PCRF est en outre configurée pour mettre à jour le seuil d'utilisation allouée avec une valeur d'une différence entre le seuil d'utilisation allouée et une utilisation consommée rapportée par la PCEF après que la PCEF rapporte l'utilisation à la première et/ou seconde PCRF ; et réaffecter un nouveau seuil d'utilisation qui est inférieur ou égal au seuil d'utilisation allouée mis à jour lorsque la première et/ou seconde PCRF décide de continuer à effectuer la surveillance d'utilisation et le seuil d'utilisation allouée à ce moment-là est supérieur à 0, et distribuer le nouveau seuil d'utilisation réaffecté à la PCEF ;
la PCEF est en outre configurée pour continuer à effectuer la surveillance d'utilisation selon le nouveau seuil d'utilisation reçu.

13. Système selon la revendication 12, dans lequel la première et/ou seconde PCRF est configurée pour rapporter une utilisation au SPR lorsque le seuil d'utilisation allouée mis à jour est égal à 0, lorsque la session IP-CAN est terminée, ou lorsque le SPR demande à la première et/ou seconde PCRF de faire un rapport.
